(19) Europäisches Patentamt
European Patent Office
Office européen des brevets

(11) **EP 1 470 958 B1**

(12) **EUROPÄISCHE PATENTSCHRIFT**

(45) Veröffentlichungstag und Bekanntmachung des Hinweises auf die Patenterteilung:
**13.06.2012   Patentblatt 2012/24**

(51) Int Cl.:
*B60R 1/00* (2006.01)      *B60Q 1/48* (2006.01)
*G08G 1/16* (2006.01)

(21) Anmeldenummer: **04007890.9**

(22) Anmeldetag: **01.04.2004**

(54) **Freiraumüberwachung bei Kraftfahrzeugen**

Monitoring of a free space for motor vehicles

Surveillance d'un espace libre pour véhicules à moteur

(84) Benannte Vertragsstaaten:
**DE FR GB**

(30) Priorität: **11.04.2003   DE 10317044**

(43) Veröffentlichungstag der Anmeldung:
**27.10.2004   Patentblatt 2004/44**

(73) Patentinhaber: **Daimler AG**
**70327 Stuttgart (DE)**

(72) Erfinder:
• **Hahn, Stefan**
**89075 Ulm (DE)**
• **Töpfer, Christian Friedrich**
**89073 Ulm (DE)**

(74) Vertreter: **JENSEN & SON**
**366-368 Old Street**
**London**
**EC1V 9LT (GB)**

(56) Entgegenhaltungen:
**EP-A- 1 065 642      EP-A- 1 170 172**
**DE-A1- 10 103 924**

**Beschreibung**

Die Erfindung betrifft ein Verfahren und eine Vorrichtung zur Überwachung des Freiraums in Fahrtrichtung eines Fahrzeuges nach dem Oberbegriff des Patentansprüches 1, der aus dem Dokument EP 1 065 642 A bekannt ist.

Bei schwierigen Fahrmanövern ist es für Führer von Kraftfahrzeugen oft schwierig abzuschätzen, entlang welcher Bahn sich ihr Fahrzeug bewegen wird und welcher Freiraum zur Kollisionsvermeidung notwendig ist. Dies ist insbesondere dann der Fall, wenn der Fahrzeugführer mit den Abmaßen des Fahrzeugs oder dessen Fahrverhalten nicht vertraut ist.

Um den Fahrer bei schwierigen Fahrmanövern zu unterstützen, wird in der japanischen Offenlegungsschrift JP 2000-67395 A ein Fahrerinformationssystem beschrieben, bei welchem die die Fahrbahn beschreibende Bilddaten mit prädizierten Fahrspuren überlagert werden. Auf diese Weise wird es dem Fahrzeugführer möglich, das zukünftige Verhalten seines Fahrzeuges besser abzuschätzen. Hierzu nutzt das System die Daten zweier Sensoren, die an den Vorderrädern des Fahrzeuges montiert sind und so über die Fahrtrichtung und Fahrgeschwindigkeit des Fahrzeuges informieren. Aus den Sensordaten wird der zukünftige Fahrweg prädiziert und als Linienstruktur einer Abbildung der Fahrspur in einer Anzeigeeinheit überlagert. Nachteilig wirkt sich bei dem System aus, dass die prädizierte Fahrspur nur mit dem Bild der Fahrbahn überlagert wird und dem Fahrer keine direkte bildhafte Information über Objekte im Bereich des Fahrweges eingeblendet wird.

Um dem Fahrzeugführer einen besseren Überblick über die tatsächliche Umgebung des Fahrzeugs und das Zusammenwirken mit diesem zu verschaffen, wird in der Patentanmeldung ein EP 1 158 803 A2 verbessertes Umgebungsüberwachungssystem vorgeschlagen. Hierbei wird das Abbild der Umgebung des Fahrzeuges mit mehreren Kamerasystemen erfasst und in eine vogelperspektivische Ansicht transformiert. Dieser Ansicht wird an der der Fahrzeugposition entsprechenden Stelle ein das Fahrzeug repräsentierendes Fahrzeugsymbol eingeblendet. Das Fahrzeugsymbol ist hierbei so gestaltet, dass es in seinen Größenrelationen stimmig in das Umgebungsbild einfügt. Die dem Fahrzeugführer angebotene Bildinformation entspricht somit einem Blick von einem Punkt oberhalb des Fahrzeuges auf dessen Umgebung; das heißt, das Fahrzeug und dessen Umgebung wird in einer Art Vogelperspektive dargestellt. Um den Fahrzeugführer in seiner Abschätzung des zukünftigen Fahrweges zu unterstützen, wird das Bildmaterial des weiteren durch eine dreidimensionale, einen prädizierten Fahrweg beschreibende Linienkontur überlagert. Die Linienkontur wird entspricht dem Kantenbild eines Rechtecks, welches entlang der prädizierten Fahrbahn gebogen wird. Die beiden unteren Längskanten des Rechtecks liegen hierbei auf der Fahrbahn auf und entsprechen hierbei im wesentlichen den in der JP 2000-67395 A dargestellten Fahrspur. Die Höhe und Breite des Rechtecks wird hierbei gleich oder kleiner als die Höhe und Breite des Fahrzeuges gewählt. Der Fahrzeugführer erhält durch diese Darstellungsform zwar eine gute Abbildung des zukünftigen Verhaltens des Fahrzeuges innerhalb seiner Umgebung, durch die für einen Fahrzeugführer ungewöhnliche perspektivische Darstellung ist es für ihn jedoch nicht möglich, auf einfache Weise eine Kollisionsgefahr abzuschätzen, welche sich durch seitlich in den Bereich der prädizierten Fahrweg hineinragende Teile ergibt. Insbesondere von oben in den prädizierten Fahrweg hineinragende Teile können nur schwer dargestellt und erkannt werden. Auch ist es nicht möglich, Durchfahrten (Tunnel) oder Einfahrten (Garagen) für den Fahrzeugführer eingängig darzustellen.

Aufgabe der Erfindung ist es deshalb, ein Verfahren und eine Vorrichtung zu finden, welche es dem Führer eines Fahrzeuges ermöglicht den zukünftigen Fahrverlauf seines Fahrzeuges in Bezug auf seine Umgebung zu ersehen und sicher Kollisionsgefahren, durch seitlich oder von oben in den prädizierten Fahrweg hineinragende Teile, zu erkennen.

Die Aufgabe wird durch ein Verfahren und eine Vorrichtung mit den Merkmalen der Patentansprüche 1 und 10 gelöst.

Vorteilhafte Ausgestaltungen und Weiterbildungen der Erfindung sind durch die Unteransprüche beschrieben.

Bei dem Verfahren zur Überwachung des Freiraums in Fahrtrichtung eines Fahrzeuges werden mittels eines Kamerasystems Bilddaten des im Bereich der Fahrtrichtung befindlichen Fahrzeugumfeldes aufgenommen. Zusätzlich wird auf Basis der Betriebsparameter und der Abmessungen des Fahrzeuges innerhalb einer Signalverarbeitungseinheit der für eine ungehinderte Fahrt benötigte dreidimensionale Freiraum voraus berechnet. Dem Führer des Kraftfahrzeuges werden dabei zumindest Teile der durch das Kamerasystem erfassten Bilddaten des benötigten Freiraums auf einer Anzeige angezeigt. In erfinderischer Weise werden die Bilddaten hierbei im wesentlichen aus einer Perspektive angezeigt, wie sich die in Fahrrichtung liegenden Fahrzeugumgebung dem Führer des Fahrzeuges bei direkter Sicht darstellen würde. Desweiteren werden in erfinderischer Weise die dem benötigten Freiraum zugeordneten Bilddaten einer Weiterverarbeitung unterzogen, wobei als ein Ergebnis dieser Weiterverarbeitung, der Fahrzeugführer darüber informiert wird, ob für eine ungehinderte Fahrt ein ausreichender Freiraum zur Verfügung steht oder nicht. In vorteilhafter Weise wird es somit möglich, durch eine kontinuierliche Auswertung der Bilddaten automatisch auch auf eine dynamische Veränderung des Fahrzeugumfeldes zu reagieren und den Fahrzeugführer darüber zu informieren, ob für eine ungehinderte Fahrt ein ausreichender Freiraum zur Verfügung steht oder nicht. Durch die Anzeige zumindest des den benötigten Freiraum darstellenden Teils der Bilddaten hat der Fahrzeugführer die Möglichkeit, selbstständig das Gefahrenpotential im prädizierten Fahrweg abzuschätzen. Die Darstellung der Bilddaten erfolgt hierbei nicht wie in den aus dem Stand der Technik bekannten Systemen in einer perspektivischen Darstellung, welche einer Sicht von oben auf die Szene entspricht (Vogelperspektive), sondern im wesentlichen aus einer Perspektive, wie sich die in Fahrrichtung liegenden Fahrzeugumgebung dem Fahrzeugführer bei direkter Sicht darstellen würde. Hierbei ist es jedoch denkbar, dass das Abbild der Fahrzeugumgebung, insbesondere bedingt durch die Optik des Kamerasystems (beispielsweise Weitwinkeloptik oder katadioptrische Kameraoptik), verzerrt dargestellt wird. Andererseits ist es jedoch auch sehr wohl denkbar, dass im Rahmen der Weiterverarbeitung eine Verzerrung der Bilddaten korrigiert wird. In für ihn eingänglicher Weise sieht der Fahrzeugführer beim Blick auf die Anzeige eine Abbildung der Umgebung, welche perspektivisch im wesentlichen mit derjenigen Ansicht übereinstimmt, die er beim direkten Blick aus dem Fenster selbst wahrnimmt. Es ist entgegen dem aus dem Stand der Technik bekannten also nicht mehr notwendig, dass der Fahrzeugführer die für ihn ungewohnte vogelperspektivische Darstellung in die realen Gegebenheiten umsetzt.

Die Daten über die Abmaße des Fahrzeugs sind in einem Speicher abgelegt, auf welche die Signalverarbeitungseinheit zugreifen kann, um unter Zuhilfenahme von Betriebsparametern des Fahrzeuges den für das Fahrmanöver benötigten Fahrraum abzuschätzen. Dabei ist es denkbar, dass die im Speicher abgelegten Abmaße nicht mit den tatsächlichen Abmaßen des Fahrzeuges übereinstimmen, sondern um eine gewisse Sicherheitsdistanz erweitert werden. Eine solche Sicherheitsdistanz könnte in vorteilhafter Weise zu 20 Zentimetern angenommen werden. Auch ist es denkbar, diese Sicherheitsdistanz durch die Signalverarbeitungseinheit variabel zu handhaben und je nach Fahrgeschwindigkeit und/oder Gefahrenpotential zu vergrößern oder zu verkleinern. Auch kann die Sicherheitsdistanz für unterschiedliche Bereiche oder Teile des Fahrzeugs unterschiedlich gehandhabt werden. So ist es beispielsweise denkbar, dass der Sicherheitsabstand von Stoßfängern geringer gehalten wird, als dies für die stoßempfindlichen Rückspiegel der Fall ist.

In erfinderischer Weise wird nun dieser Speicher zur Ablage der Fahrzeugabmessungen so ausgelegt und organisiert, dass darin eine Mehrzahl von Datensätze bezüglich unterschiedlicher Fahrzeugabmessungen abgespeichert sind, welche einzeln, durch gezielte Auswahl selektiert, der Signalverarbeitung zur Verfügung gestellt werden können. Der Speicher kann auch mit einem Mittel versehen sein, durch welches wenigstens einer der im Speicher abgespeicherten Datensätze ausgewechselt werden kann. Dies bietet den Vorteil, dass das System zur Freiraumüberwachung relativ leicht an Veränderungen z.B. der Fahrzeugkonturen (z.B. neuer Anhänger, andere Aufbauten usw.) angepasst werden kann. Gerade eine solche Ausgestaltung ist, vor allem bei Betrieb einer Fahrzeugflotte, insbesondere Lastkraftwagen mit wechselnden Aufbauten von großem Vorteil. So kann auch elektrotechnisch unversiertes Betriebspersonal über einfache Bedienelemente das erfinderische System bedienen. Dies ohne Austausch von elektronischen Komponenten oder dem Verbinden und Bedienen von Programmiergeräten.

In besonders vorteilhafter Weise lassen sich Änderungen in den Abmaßen des Fahrzeuges besonders einfach in den der Signalverarbeitungseinheit zugeordneten Speicher übernehmen, indem ein neuer die Abmessungen beschreibender Datensatz einfach über eine mobile oder stationäre Datenverarbeitungsanlage über geeignete Schnittstellen in den Speicher eingelesen wird. Besonders vorteilhaft kann bei entsprechender Ausgestaltung des Systems das Einlesen und die Auswahl von Datensätzen auch drahtlos über eine Kommunikationsanlage erfolgen. Im Falle sich häufiger wiederholender (gleicher) Änderungen (z.B. Fahrt mit aufgeladenen, bzw. abgeladenen Container) können auch mehrere unterschiedliche Fahrzeugkonturen oder - abmaße im Speicher der Datenverarbeitungsanlage enthalten sein und abgerufen werden. Insbesondere hierfür kann eine dem Fahrzeugführer zugängliche Tastatur vorgesehen werden. In besonders einfacher und gewinnbringender Weise verfügt diese Tastatur über einzelne den jeweils in dem Speicher abgelegten Datensätzen zugeordnete Tasten, so dass mit einem einzigen gezielten Tastendruck der gewünschte Datensatz ausgewählt werden kann.

Nachfolgend wird die Erfindung anhand von Ausführungsbeispielen und mit Hilfe von Figuren im Detail erläutert.

Figur 1     zeigt eine Bildszene (10), bei welcher die Randbe- grenzung des Freiraums durch Überlagerung von symbolisch dargestellten Wänden (16) visualisiert ist.

Figur 2     zeigt eine zu Figur 1 identische Bildszene (20), wobei hier die Randbegrenzung des Freiraums durch Überlagerung mit einem symbolisch dargestellten virtuellen Fahrschlauches (26) mit Schachbettmuster visualisiert ist.

Figur 3     zeigt das Verhältnis von Weltkoordinatensystem zum Fahrzeugkoordinatensystem.

Figur 4     zeigt die Abbildungsgeometrie eines parabolischen Spiegels.

Figur 5     zeigt die Beziehung zwischen den Koordinaten einer Omnicam und denjenigen einer Lochkamera.

Figur 6     zeigt die inverse Transformation der Bildposition einer Omnicam im Bezug auf ein Lochkameramodell.

Figur 7     zeigt das durch eine Omnicam aufgenommene Bild in Fahrtrichtung, welches der Horizont eingezeichnet ist.

Figur 8     zeigt das optische Flussfeld der Bildpunkte inner- halb der Szene.

Figur 9     zeigt das optische Flussfeld für eine Wand, welche senkrecht zur optischen Achse der Omnicam steht, bei Bewegung entlang der optischen Achse.

Figur 10     zeigt den optischen Fluss einer Seitenwand bei der Bewegung des Fahrzeuges.

Figur 11    zeigt den optischen Fluss einer horizontalen Ebene der Bewegung des Fahrzeuges.

Figur 12    zeigt die Tiefenkarte eines Korridors.

Figur 13    zeigt den optischen Fluss für den Korridor aus Fi- gur 12.

Figur 14    zeigt farbcodiert das in Figur 13 gezeigte Fluss- feld für den horizontalen Fluss.

Figur 15    zeigt farbcodiert das in Figur 13 gezeigte Fluss- feld für den vertikalen Fluss.

Nachdem durch die Signalverarbeitungseinheit der Fahrweg und der hierfür notwendige Freiraum prädiziert wurde, ist es besonders vorteilhaft, wenn im Rahmend der Weiterverarbeitung der Bilddaten deren dynamische, zeitliche Veränderungen dieser Daten in Betracht gezogen werden. Auf diese Weise kann das System Objekte oder Personen erkennen, welche in den für das Fahrmanöver benötigten Freiraum eindringen. Ist dies der Fall, so sollte in gewinnbringender Weise der Führer des Fahrzeuges darüber informiert werden, dass kein ausreichender Freiraum mehr zur Verfügung steht. Diese Information kann insbesondere durch optisch, akustisch oder haptisch wahrnehmbare Signalgeber erfolgen. Anderseits ist es auch denkbar in den dem Fahrzeugführer angezeigten Bilddaten die den Freiraum behindernden Objekte oder Personen hervorgehoben darzustellen. Hierzu eignet beispielsweise eine farbliche Hervorhebung, insbesondere eine in Bezug auf die Kollisionsgefahr abgestufte Falschfarbdarstellung (beispielsweise: hohe Kollisionsgefahr -> Objekt wird rot eingefärbt; geringe Kollisionsgefahr -> Objekt wird gelb eingefärbt). In besonders vorteilhafter Weise können die hindernden Objekte oder Personen aber auch dadurch hervorgehoben werden, dass sie durch Symbole überlagert werden. Werden beispielsweise im Rahmen der Weiterverarbeitung der Bilddaten bewegte Objekte mittels eines auf dem Optischen Fluss basierenden Bildverarbeitungsalgorithmus detektiert, so kann in gewinnbringender Weise das bewegte Objekt mit symbolhaften Bewegungsvektoren (Pfeilen) überlagert werden, welche die Bewegungsrichtung und Bewegungsgeschwindigkeit (Länge der Pfeile) beschreiben.

Eine besonders vorteilhafte Art und Weise den Fahrzeugführer über den ihm zur Verfügung stehenden Freiraum zu informieren besteht darin, dass im Rahmen der Weiterverarbeitung der Bilddaten die dem Fahrzeugführer angezeigten Bilddaten durch eine symbolische Darstellung der Randbegrenzungen des durch die Vorausberechnung in der Signalverarbeitungseinheit ermittelten, benötigten Freiraums überlagert werden. Hierbei ist es besonders vorteilhaft, die Randbegrenzungen durch symbolisch dargestellte Wände zu beschreiben. Die Höhe der Wände entspricht hierbei der Höhe des benötigten Freiraums (d.h. im wesentlichen den im Speicher abgelegten Abmessungen bezüglich der maximalen Höhe des Fahrzeuges).

In besonders vorteilhafter Weise, wird die Randbegrenzung so dargestellt, dass der benötigte Freiraum durch eine Art Fahrschlauch begrenzt wird; hierzu wird die Randbegrenzung durch symbolisch dargestellte Wände und einen Deckenbereich in Form eines Tunnels erfolgen. Durch diesen 'Tunnelblick' wird die Aufmerksamkeit des Fahrzeugführers gezielt gelenkt, auch kann er wesentlich besser Objekte die seitlich oder von oben in den Freiraum hineinragen besser erkennen.

Für den Fahrer wird die Abschätzung, ob ortsfeste Gegenstände in den rückwärtigen Freiraum hineinragen besonders einfach, wenn er während der (Rückwärts-)fahrt die Relativbewegungen von Gegenständen im Bild vergleichen kann mit der Relativbewegung eines ortsfesten symbolischen Fahrschlauches: bewegen sich die Gegenstände schneller als die Begrenzungen des Fahrschlauches, befinden sie sich räumlich näher - also innerhalb des direkt gefährdeten Bereiches. Bewegen sie sich während der Fahrt langsamer durch das Bild, so sind sie außerhalb des Fahrschlauchs und es besteht keine Gefahr, dass sie bei Weiterfahrt berührt werden. Aus diesem Grund ist es vorteilhaft, Wände und Decke, ggf. sogar den Boden, des symbolisch dargestellten Tunnels so zu gestalten, dass sie

1.) eine geometrisch klare und eindeutig identifizierbare Struktur besitzen (beispielsweise: Gitterstruktur, Schachbrettmuster oder Aneinanderreihung von Balken)

2.) einen "Durchblick" auf die hinterlegte Videoszene gestatten (beispielsweise: durchbrochene oder halbtransparente Struktur der Wände und/oder der Decke).

3.) Aufgrund der Fahrzeugbewegung jeweils so berechnet bzw. bestimmt werden, dass sie in Längsrichtung stillzustehen bleiben.

Um die Überlagerung des Kamerabildes mit der symbolhaften Beschreibung der Randbegrenzungen des notwendigen Freiraumes möglichst realistisch anmuten zu lassen, sind die Abbildungseigenschaften (Transformationsgleichungen) des Kamerabildes zu beachten. Zum besseren Verständnis, insbesondere bezüglich der Realisierung der oben unter Punkt 3 angeführten vorteilhaften Ausgestaltung (Stillstand in Längsrichtung) der graphischen Überlagerung, werden nachfolgend beispielhaft die notwendigen Transformationsgleichungen für die Überlagerung eines mittels einer kathadioptrischen Kamera (Omnicam) mit einem parabolischen Spiegel aufgenommen Bildes aufzeigt. Hierbei werden grundlegend und im Detail die einzelnen Schritte und Transformationsgleichungen aufgezeigt und hergeleitet, welche für eine erfindungsgemäße Überlagerung des Kamerabildes mit den Randbegrenzungen des notwendigen Freiraums benötigt werden.

Selbstverständlich ist die Erfindung nicht auf die Verwendung einer solchen Kamera beschränkt, sondern die anhand dieser Kamerageometrie im Detail erläuterten notwendigen Transformationen lassen sich direkt, in einfacher Weise auch auf Kamerasysteme mit anderen Abbildungseigenschaften übertragen.

**Koordinatensysteme**

Die hier verwendeten Koordinatensysteme folgen den Konventionen aus der Literatur über optischen Fluss. Im 3D-Kamerakoordinatensystem zeigt die Z-Achse in Blickrichtung, die $X$-Achse nach rechts und die $Y$-Achse nach unten. Die zentrierten Bildkoordinaten sind gegeben durch eine $x$-Achse nach rechts und eine $y$-Achse nach unten. Der Ursprung beider Koordinatensysteme ist die Bildmitte.

**Von Welt- zu Fahrzeugkoordinaten**

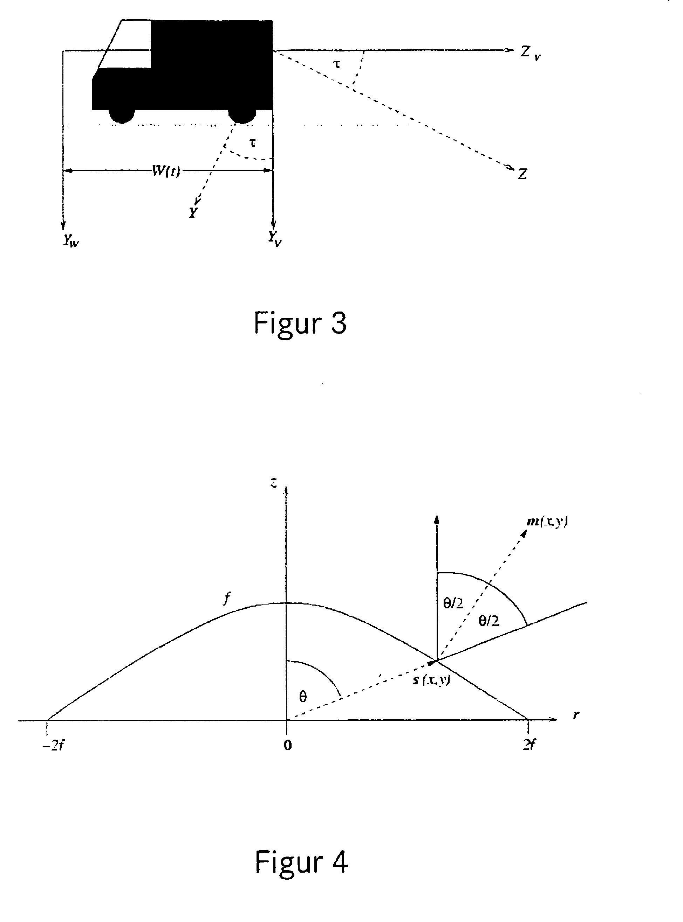

Für eine auf einem bewegten Fahrzeug montierte Kamera kann man zunächst zwei wichtige Koordinatensysteme einführen: ein Weltkoordinatensystem, in dem die Fahrzeugumgebung ruht und ein Fahrzeugkoordinatensystem, dass sich mit dem Fahrzeug bewegt, siehe Fig. 3. Wenn sich das Fahrzeug in Richtung der $Z_w$-Achse bewegt, wird die Transformation zwischen diesen beiden Koordinatensystemen durch die Position $W(t)$ des Fahrzeugs im Weltkoordinatensystem beschrieben:

$$\begin{pmatrix} X_V \\ Y_V \\ Z_V \end{pmatrix} = \begin{pmatrix} X_W \\ Y_W \\ Z_W \end{pmatrix} - \begin{pmatrix} 0 \\ 0 \\ W(t) \end{pmatrix} \qquad (1)$$

Die momentane Geschwindigkeit des Fahrzeugs ist $V = W$. Damit ist die zeitliche Ableitung eines Punktes, der in der Fahrzeugumgebung ruht:

$$\begin{pmatrix} \dot{X}_V \\ \dot{Y}_V \\ \dot{Z}_V \end{pmatrix} = \begin{pmatrix} 0 \\ 0 \\ -V \end{pmatrix} \qquad (2)$$

**Von Fahrzeug- zu Kamerakoordinaten**

In Fig. 3 ist gezeigt, dass die Kamerablickrichtung um einen Winkel $\tau$ gegen die (Rückwärts-)Fahrtrichtung geneigt ist. In diesem Fall ergibt sich die Transformation von Fahrzeug- zu Kamerakoordinaten wie folgt:

$$\begin{pmatrix} X \\ Y \\ Z \end{pmatrix} = \begin{pmatrix} 1 & 0 & 0 \\ 0 & \cos\tau & -\sin\tau \\ 0 & \sin\tau & \cos\tau \end{pmatrix} \cdot \begin{pmatrix} X_V \\ Y_{V'} \\ Z_V \end{pmatrix} \qquad (3)$$

$$\begin{pmatrix} X_V \\ Y_V \\ Z_V \end{pmatrix} = \begin{pmatrix} 1 & 0 & 0 \\ 0 & \cos\tau & \sin\tau \\ 0 & -\sin\tau & \cos\tau \end{pmatrix} \cdot \begin{pmatrix} X \\ Y \\ Z \end{pmatrix} \qquad (4)$$

Im allgemeinen Fall enthält diese Transformation nicht nur den Neigewinkel $\tau$, sondern die drei Eulerwinkel.
Aus Gl. 2 folgt die Bewegung eines stationären Punktes in Kamerakoordinaten

$$\dot{X} \;=\; 0 \qquad (5)$$

$$\dot{Y} \;=\; V\sin\tau \qquad (6)$$

$$\dot{Z} \;=\; -V\cos\tau \qquad\qquad (7)$$

**Polare Kamerakoordinaten**

Die arctan($y$,$x$)-Funktion mit zwei Argumenten bestimmt die Phase der komplexen Zahl $x + iy$ im Wertebereich] - $\pi$, $\pi$]. Die Reihenfolge der Argumente wurde nach dem Vorbild der ANSI-C-Funktion *atan2* gewählt.

Umwandlung von Polar- in cartesische Koordinaten:

$$X \;=\; R\sin\theta\cos\phi \qquad\qquad (8)$$

$$Y \;=\; R\sin\theta\sin\phi \qquad\qquad (9)$$

$$Z \;=\; R\cos\theta \qquad\qquad (10)$$

Umwandlung von cartesischen in Polarkoordinaten:

$$R \;=\; \sqrt{X^2 + Y^2 + Z^2} \qquad\qquad (11)$$

$$\theta \;=\; \arctan(\sqrt{X^2 + Y^2}, Z) \qquad\qquad (12)$$

$$\phi \;=\; \arctan(Y, X) \qquad\qquad (13)$$

**Polare Bildkoordinaten**

Umwandlung von Polar- in cartesische Koordinaten:

$$x \;=\; r\cos\phi \qquad\qquad (14)$$

$$y \;=\; r\sin\phi \qquad\qquad (15)$$

Umwandlung von cartesischen in Polarkoordinaten:

$$r \;=\; \sqrt{x^2 + y^2} \qquad\qquad (16)$$

$$\phi \;=\; \arctan(y, x) \qquad\qquad (17)$$

**Schnittpunkte der Sichtstrahlen mit Ebenen im Objektraum**

Ein Sichtstrahlvektor $w$ sei gegeben in Fahrzeugkoordinaten . Falls $w_1 \neq 0$, schneidet der Strahl die Ebene $X_V = a$ im Punkt

$$p = \frac{a}{w_1} w \qquad\qquad (18)$$

Falls $w_2 \neq 0$, schneidet der Strahl die Ebene $Y_V = b$ im Punkt

$$p = \frac{b}{w_2} w \qquad (19)$$

Falls $w_3 \neq 0$, schneidet der Strahl die Ebene $Z_v = c$ im Punkt

$$p = \frac{c}{w_3} w \qquad (20)$$

**Omnicam-Abbildung**

Spiegelform

Die Abbildung durch die hier modellierte Omnicam erfolgt in zwei Schritten: Eine Reflexion an einem parabolischen Spiegel gefolgt von einer orthographischen Abbildung.
Die paraboloide Spiegeloberfläche mit einer Brennweite $f$ ist gegeben durch

$$z = f - \frac{x^2 + y^2}{4f}. \qquad (21)$$

Dieser Ausdruck wird in vielen folgenden Gleichungen verwendet. D.h. dort steht $z$ für den Term auf der rechten Seite der Gleichung, der von der Bildposition $(x,y)$ abhängt. Da der Fokus der Paraboloids im Koordinatenursprung ist, ist die Blickrichtung am Bildpunkt $(x,y)$ gegeben durch

$$s(x,y) = \begin{pmatrix} x \\ y \\ z \end{pmatrix} = \begin{pmatrix} x \\ y \\ f - \frac{x^2 + y^2}{4f} \end{pmatrix} \qquad (22)$$

Die Ableitung der Paraboloid-Gleichung (21) ist

$$\frac{dz}{dx} = -\frac{x}{2f} \qquad (23)$$

$$\frac{dz}{dy} = -\frac{y}{2f}. \qquad (24)$$

D.h., ein Normalenvektor auf die Spiegeloberfläche hat die Richtung

$$m(x,y) = \begin{pmatrix} x \\ y \\ 2f \end{pmatrix} \qquad (25)$$

Dabei wird nicht gefordert, dass $s(x,y)$ oder $m(x,y)$ Einheitsvektoren sind.

**Projektion von Punkten**

Die Omnicam-Abbildung ist am einfachsten darstellbar in Polarkoordinaten:

$$r = 2f \tan \frac{\theta}{2} \qquad (26)$$

Wie oben eingeführt, ist r der Abstand von der Bildmitte, gemessen in Pixeln. θ ist die Neigung der Blickrichtung zur optischen Achse. Diese Beziehung kann mithilfe von Fig. 4 und Gl. (25) ableiten. Das Azimut φ ist in Kamera- und Bildkoordinaten gleich.

In cartesischen Koordinaten lautet dies

$$\boxed{x = \frac{2fX}{R+Z}} \quad = \quad \frac{2fX}{\sqrt{X^2 + Y^2 + Z^2} + Z} \qquad (27)$$

$$\boxed{y = \frac{2fY}{R+Z}} \quad = \quad \frac{2fY}{\sqrt{X^2 + Y^2 + Z^2} + Z} \qquad (28)$$

**Projektion von Geraden**

Eine Gerade im Raum ist gegeben durch einen Punkt $p$ und eine Richtung $l = (l_1, l_2, l_3)^t$ mit $|l| = 1$. Der Vektor $n = p \times l$ ist senkrecht auf der Ebene, die durch die Gerade und den Ursprung der Kamerakoordinaten aufgespannt wird. Die Komponenten von $n$ bestimmen die Art des Omnicam-Bildes der 3D-Geraden:

- Falls $n = 0$, schneidet die Gerade den Ursprung und ihr Bild ist ein Punkt mit den Koordinaten

$$x \quad = \quad \frac{2fl_1}{1 + l_3} \qquad (29)$$

$$y \quad = \quad \frac{2fl_2}{1 + l_3} \qquad (30)$$

- Falls $n \neq 0$, aber $n_3 = 0$, ist die 3D-Gerade parallel zur optischen Achse und ihr Bild ist eine 2D-Gerade durch die Bildmitte mit der Gleichung

$$n_1 x + n_2 y = 0 \qquad (31)$$

- Andernfalls ist das Bild der Geraden ein Kreisbogen mit Mittelpunkt $(x_c, y_c)$ und Radius $r$:

$$x_c \quad = \quad 2fn_1/n_3 \qquad (32)$$

$$y_c \quad = \quad 2fn_2/n_3 \qquad (33)$$

$$r \quad = \quad 2f|n|/n_3 \qquad (34)$$

**Abstand von Ebenen**

Die Länge des Vektors $s(x,y)$ aus Gl. (22) ist

$$|s(x,y)| = \sqrt{x^2 + y^2 + z^2} = f + \frac{x^2 + y^2}{4f} = 2f - z \qquad (35)$$

Daher hat ein Punkt in der Entfernung $R$ mit der Bildposition ($x,y$) die Kamerakoordinaten

$$\begin{pmatrix} X \\ Y \\ Z \end{pmatrix} = R \, \frac{s(x,y)}{|s(x,y)|} \qquad (36)$$

Dies ergibt eine kompakte Beziehung zwischen den Kamerakoordinaten eines Objektpunktes einerseits sowie Abstand $R$ und Bildposition ($x,y$) andererseits:

$$\begin{pmatrix} X \\ Y \\ Z \end{pmatrix} = \frac{R}{2f - z} \begin{pmatrix} x \\ y \\ z \end{pmatrix} \qquad (37)$$

oder ausführlicher

$$\begin{pmatrix} X \\ Y \\ Z \end{pmatrix} = \frac{R}{4f^2 + x^2 + y^2} \begin{pmatrix} 4fx \\ 4fy \\ 4f^2 - x^2 - y^2 \end{pmatrix} \qquad (38)$$

Der Abstand einer senkrechten Wand mit der Gl. $X = a$ ist so für einen Bildpunkt ($x,y$) gegeben durch

$$R(x,y) = \frac{2f - z}{x} a \qquad (39)$$

oder ausführlicher

$$R(x,y) = \frac{4f^2 + x^2 + y^2}{4fx} a \qquad (40)$$

Falls $a < 0$ ist die Wand nur auf der linken Bildseite ($x < 0$) sichtbar und umgekehrt. Eine horizontale Ebene hat die Gleichung $Y_V = b$ im Weltkoordinatensystem. Mit Gl. (4) kann man dies in Kamerakoordinaten transformieren:

$$Y \cos \tau + Z \sin \tau = b \qquad (41)$$

Eingesetzt in Gl. (38):

$$R(x,y) = \frac{2f - z}{y \cos \tau + z \sin \tau} b \qquad (42)$$

oder ausführlich

$$R(x,y) = \frac{4f^2 + x^2 + y^2}{4fy\cos\tau + (4f^2 - x^2 - y^2)\sin\tau} b \qquad (43)$$

Falls $b > 0$, ist die Ebene nur unterhalb des Horizonts sichtbar.

**Rektifikation von Omnicam-Bildern**

Für Omnicams mit einem effektiven Projektionspunkt kann aus dem Omnicam-Bild eine Lochkmieraansicht rekonstruiert werden. [1] Die zentrierten Lochkamerakoordinaten sind gegeben durch die Projektionsgleichung

$$x' = f\frac{X}{Z} \qquad (44)$$

$$y' = f\frac{Y}{Z} \qquad (45)$$

Die Beziehung zwischen den Omnicam- und Lochkamerakoordinaten sind gegeben durch eine Kompressionsfunktion, die man aus Gl. (27f) ableiten kann:

$$\kappa(\rho') = \frac{2}{1 + \sqrt{1 + \rho'^2}} \qquad (46)$$

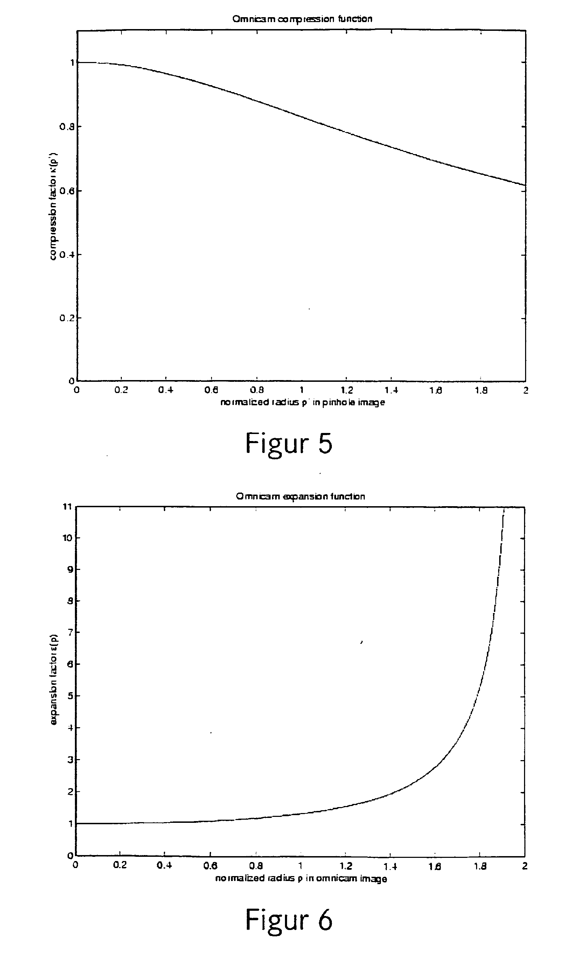

Einen Graphen dieser Kompressionsfunktion zeigt Fig. 5.
Die Omnicam-Bildposition $(x,y)$ entspricht den zentrierten Lochkamerakoordinaten $(x',y')$ gemäß

$$x = \kappa\left(\frac{\sqrt{x'^2 + y'^2}}{f}\right) x' \qquad (47)$$

$$y = \kappa\left(\frac{\sqrt{x'^2 + y'^2}}{f}\right) y' \qquad (48)$$

Die inverse Transformation ist

$$x' = \frac{4f^2}{4f^2 - x^2 - y^2} x \qquad (49)$$

$$y' = \frac{4f^2}{4f^2 - x^2 - y^2} y \qquad (50)$$

Einen Graph dieses Koeffizienten $4/(4 - \rho^2)$ zeigt Fig. 6.

**Horizont und FOE**

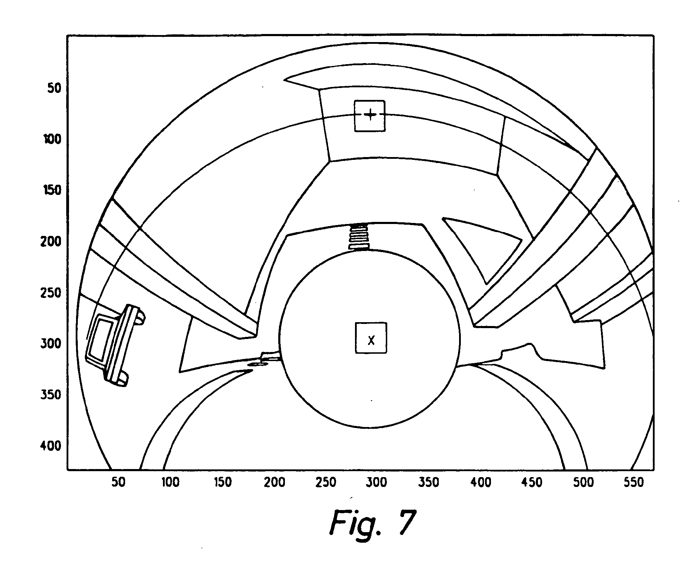

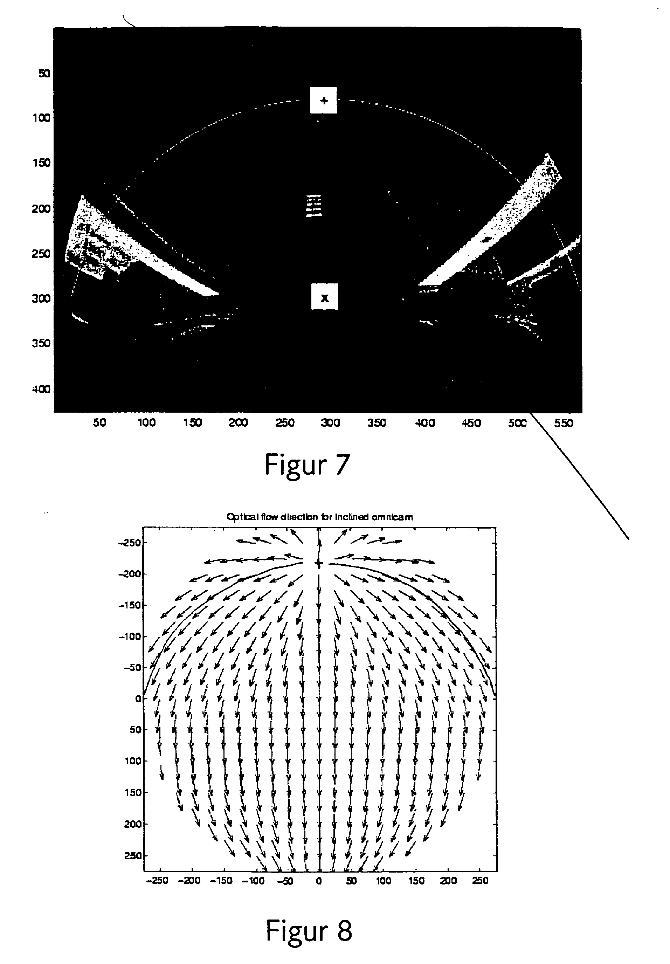

Zur Beschreibung der Effekte der Fahrzeugbewegung im Bild ist benutzt man die Begriffe *Horizont* und Expansionspunkt (oder FOE von engl. *focus of expansion*). Fig. 3 zeigt, wie eine geneigte Kamera vom Fahrzeug mitbewegt wird, das sich in einer horizontalen Ebene bewegt. Der Horizont ist das Bild einer dazu parallelen Ebene, die durch das Projektionszentrum geht, wie in Fig. 7 gezeigt. Der Hauptpunkt der Kamera ist mit x markiert, der FOE mit einem +, der Horizont als gelbe Linie.

Eine Gerade in der Horizontebene ist gegeben durch einen Punkt $p_V = (0,0,1)^t$ und die Richtung $l_V = (1,0,0)^t$. Eine Normale auf der Horizontebene ist nv $= (0,1,0)^t$, und hat die Kamerakoordinaten $n = (0, \cos \tau, \sin \tau)^t$. Wie oben diskutiert, muss man zwei Fälle unterscheiden

- Für Kameraneigung $\tau = 0$ ist der Horizont eine Gerade mit $y = 0$.
- Für $\tau \neq 0$ ist der Horizont ein Kreisbogen, dessen Mittelpunkt und Radius gegeben sind durch

$$x_H \quad = \quad 0 \qquad\qquad (51)$$

$$y_H \quad = \quad 2f \cot \tau \qquad\qquad (52)$$

$$r_H \quad = \quad 2f / \sin \tau \qquad\qquad (53)$$

Für die in Fig. 3 gezeigte, geradlinige horizontale Bewegung liegt der FOE in der Mitte des Horizonts:

$$x_{FOE} = 0 \qquad\qquad (54)$$

Die Ordinate ergibt sich für $\tau \neq 0$

$$y_{FOE} = y_H - r_H = -2f \tan \frac{\tau}{2} \qquad\qquad (55)$$

wie auch aus Gl. (26) folgt.

Bei einer symbolischen Darstellung des Fahrraums durch ein Gittermuster bestehen nun gerade die Gitterelemente aus senkrechten und waagerechten Abschnitte von Geraden $p_i$, $l_i$, gemäß der Erläuterung zu den Gleichungen (29) bis (34), wobei die $p_i$ jeweils Aufpunkte auf den Geradenabschnitten und $l_i$ jeweils einen von zwei Einheitsvektoren in Richtung der entsprechenden Gitterelemente darstellt. Diese Geradenabschnitte werden wie angegeben in Kreisabschnitte auf der Bildsensorfläche transformiert und diese als Gittermuster dargestellt. Die ortsfeste Darstellung der symbolischen Gitterelemente wird nun dadurch bewerkstelligt, dass bei einer - etwa durch einen Drehgeber am Rad gemessene - Fahrt um die Strecke s in Längsrichtung des Fahrzeugs alle Aufpunkte $l_i$ um die Strecke s entgegen der Fahrtrichtung verschoben werden.

$$p_i^{neu} = p_i - s * e$$

wobei e den Einheitsvektor in Fahrzeuglängsrichtung im Kamerakoordinatensystem darstellt.

Weiterhin ist es sinnvoll, dass der Fahrer sein Fahrzeug nicht unbedingt dauernd bewegen muss, um auf die beschriebene Weise anhand der Bewegungsmuster im Bild die Gefährdung von Objekten zu bestimmen. Es sollte ihm deshalb ermöglicht werden, z.B. durch Betätigung einer Taste eine Wiederholung der letzten Bewegungssequenz auf dem Anzeigesystem zu generieren. Dieses kann z.B. das Bildmaterial der letzten 5m Fahrstrecke mit eingeblendetem Fahrschlauch, dargestellt in einer Endlosschleife sein.

Mögliche Gestaltungselemente des symbolischen Fahrschlauchs, welche die im letzten Abschnitt beschriebenen Bedingungen der klaren geometrischen Struktur und der Transparenz erfüllen sind z.B. die Darstellung der Randbegrenzung mittels eines Gittermusters, einer Aneinanderreihung von Balken oder eines Schachbrettmusters.

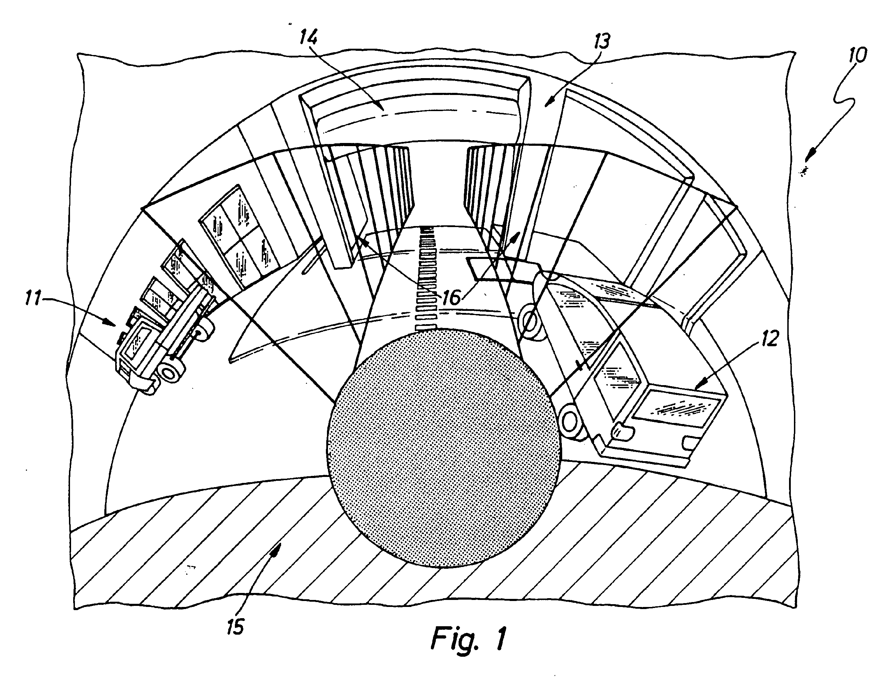

Figur 1 zeigt eine Bildszene 10, bei welcher die Randbegrenzung des Freiraums durch Überlagerung von symbolisch dargestellten Wänden 16 visualisiert ist. Die der realen Szene zuzuordnenden Bilddaten sind durch die gewinnbringende Verwendung einer katadioptrischen Kamera verzerrt. Für eine Fahrzeugführer jedoch sehr leicht wahrnehmbar sind die wesentlichen Objekte im Umfeld, wie beispielsweise die Fahrzeuge 11 und 12, sowie die Garage 13 mit dem Rolltor 14 sehr leicht zu erkennen. In dem dargestellten Beispiel bildet sich durch die Verwendung der katadioptrischen Kamera, der in Fahrtrichtung liegende Teil Bereich 15 des eigenen Fahrzeuges am unteren Rand der dargestellten Bilddaten ab. Eine solche Darstellung hat den Vorteil, dass dem Fahrzeugführer eine Beobachtung der potentiell am meisten kollisionsgefährdeten Bereiche des Fahrzeuges ermöglicht wird.

Ohne die Überlagerung der Bilddaten mit den symbolischen Wänden 16 wäre es für den Fahrzeugführer jedoch sehr schwer sicher abzuschätzen, ob er mit seinem Fahrzeug in die Garage 13 einfahren kann, ohne gegen das teilweise herabgelassene Rolltor 14 zu stoßen. Die symbolhaften Wände zeigen ihm jedoch an, dass für sein Fahrzeug noch ausreichend Freiraum unter dem Rolltor vorhanden ist, um kollisionsfrei in die Garage einzufahren. Aus dem geraden Verlauf der symbolhaften Wände kann der Fahrzeugführer auch entnehmen, dass sein Fahrzeug zur Einfahrt in die Garage bereits optimal ausgerichtet ist, so dass er während des Fahrbetriebs keine wesentlichen Lenkkorrekturen mehr vornehmen muss.

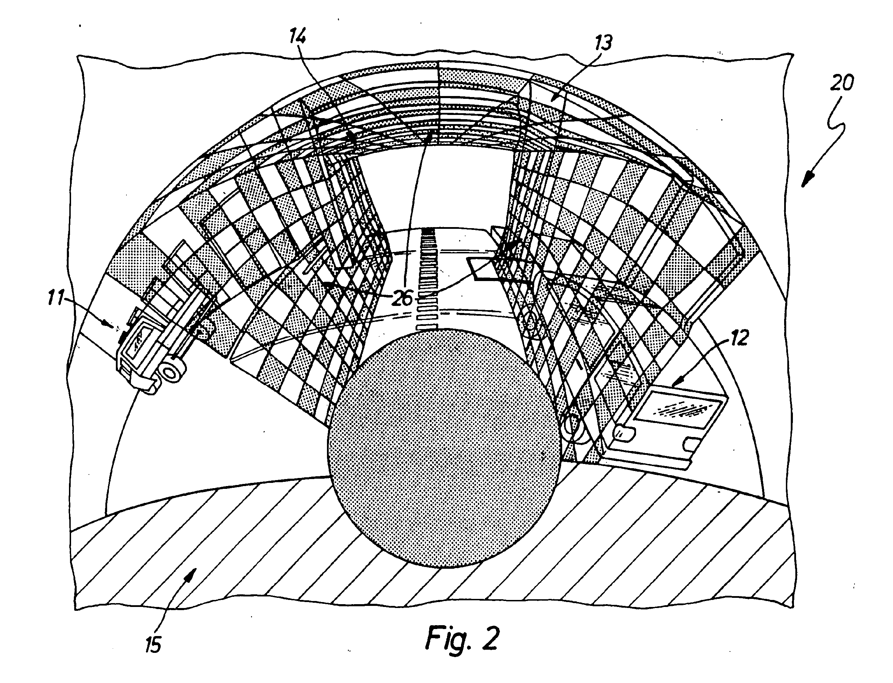

Figur 2 zeigt eine zu Figur 1 identische Bildszene (20), wobei hier die Randbegrenzung des Freiraums durch Überlagerung mit einem symbolisch dargestellten virtuellen Fahrschlauches (26) mit Schachbettmuster visualisiert ist. Durch die Verwendung eines Schachbrettmusters zur Hervorhebung der Randbegrenzungen wird bei der Betrachtung der Bildszene auf der Anzeige in besonders eingänglicher Weise die Eigenbewegung des Fahrzeuges deutlich. Dies ist besonders dann vorteilhaft, wenn aufgrund großer Enge mit nur sehr geringen Geschwindigkeiten gefahren werden kann.

Durch die in den dargestellten Beispielen verwendete klare geometrische Struktur des symbolischen Fahrschlauchs wird in Verbindung mit einer verzeichnenden Optik, etwa einem katadioptrischen Objektiv ein weiterer Vorteil erzielt: durch die Referenzstruktur des auf die gleiche Art verzeichneten symbolischen Fahrschlauches fällt es dem Fahrer wesentlich leichter, die Verzeichnungen des Objektivs unbewusst abzuschätzen und zu berücksichtigen. Besonders deutlich wird dieses in den Figuren 1 und 2 dargestellten Beispielen am Bildrand rechts und links, in denen der Blick auf eine querende Fahrbahn zu sehen ist. Beispielsweise erleichtern die in Figur 2 gezeigte gewölbten Begrenzungen des rechteckigen Fahrschlauches die Interpretation, welches die in Realität unten und oben liegenden Elemente der Szene sind. Bei der hier gewählten Verzeichnung liegt die Strasse als unteres Element innen und der Himmel am äußeren Rand der kreisförmigen Darstellung.

In besonders vorteilhafter Weise eignet sich die Erfindung zur Rückraumüberwachung beim Rangierbetrieb eines Kraftfahrzeuges. Hierbei ist der rückwärtige Raum für den Fahrzeugführer oft nicht direkt einsehbar, so dass er auf eine besonders eingängige Darstellung der Umgebung und der Interaktion seines Fahrzeuges darin angewiesen ist.

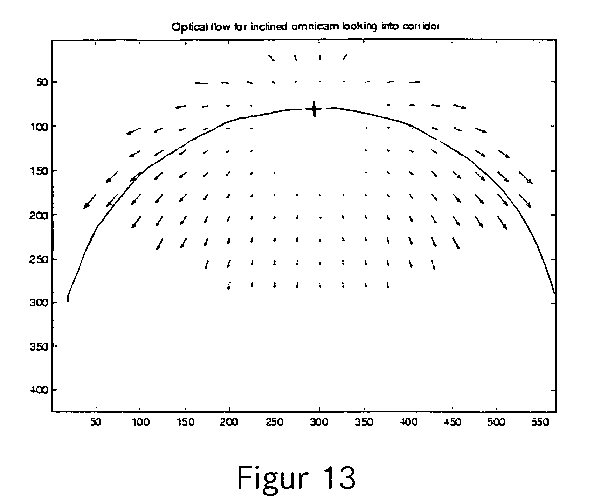

Eine weitere Unterstützung und Entlastung des Fahrers beim Rangieren kann erreicht werden, wenn ihm der oben beschriebene Vergleich der Bewegung eines ortsfesten Fahrschlauches mit der tatsächlichen Bewegung von Gegenständen im Bild nicht mehr anhand des Augenscheins überlassen, sondern von einer Berechnungseinheit selbständig vorgenommen wird. Dieses ist möglich mit der Anwendung von z.B. der Robotik bekannten Verfahren des Vergleichs des gemessenen optischen Flusses im Bild mit dem errechneten optischen Flusses eines Modellvektorfeldes, hier dem Modell eines geometrisch definierten Fahrschlauches entsprechend Figur 13.

Die für die automatische Auswertung und den Vergleich des optischen Flusses notwendige Algorithmik ist nachstehend beispielhaft für die Verwendung eines Kamerasystems bestehend aus einer katadioptrischen Kamera (Omnicam) mit einem parabolischen Spiegel beschrieben. Selbstverständlich lassen sich diese Grundlagen entsprechend auch auf andere Kamerasysteme mit anderen optischen Eigenschaften übertragen.

**Optischer Fluss**

**Allgemeiner optischer Fluss**

The derivative of the Omnicam projection equations Die Zeitableitung der Omnicam-Abbildungsgleichungen (27f) ist

$$\dot{x} = \frac{2f \cdot (R \cdot (R+Z) - X^2)}{R \cdot (R+Z)^2} \dot{X} - \frac{2fXY}{R \cdot (R+Z)^2} \dot{Y} - \frac{2fX}{R \cdot (R+Z)} \dot{Z} \quad (56)$$

$$\dot{y} = -\frac{2fXY}{R \cdot (R+Z)^2} \dot{X} + \frac{2f \cdot (R \cdot (R+Z) - Y^2)}{R \cdot (R+Z)^2} \dot{Y} - \frac{2fY}{R \cdot (R+Z)} \dot{Z} \quad (57)$$

Setzt man die Abbildungsgleichungen (27f) wieder ein, ergibt sich

$$\dot{x} \;=\; \left(z + \frac{y^2}{2f}\right)\frac{\dot{X}}{R} \;-\; \frac{xy}{2f}\frac{\dot{Y}}{R} \;-\; x\frac{\dot{Z}}{R} \tag{58}$$

$$\dot{y} \;=\; -\frac{xy}{2f}\frac{\dot{X}}{R} \;+\; \left(z + \frac{x^2}{2f}\right)\frac{\dot{Y}}{R} \;-\; y\frac{\dot{Z}}{R} \tag{59}$$

**Optischer Fluss bei geneigter Kamera**

Für eine geneigte Kamera wie in Fig. 3 wird die Bewegung beschrieben durch Gl. (5f). Setzt man dies in die Gl. (58f) oben ein, folgt

$$\dot{x} = \frac{Vx}{R} \cdot \left(\cos\tau - \frac{y}{2f}\sin\tau\right) \tag{60}$$

$$\dot{y} = \frac{V}{R} \cdot \left(y\cos\tau + (z + \frac{x^2}{2f})\sin\tau\right) \tag{61}$$

Dabei beachte man, dass $R$ und $z$ von der Bildposition abhängen. Ausführlicher lautet daher der vertikale Fluss

$$\dot{y} = \frac{V}{R} \cdot \left(y\cos\tau + \frac{4f^2 + x^2 - y^2}{4f}\sin\tau\right) \tag{62}$$

Der Abstand $R(x, y)$ moduliert den horizontalen und vertikalen Fluss mit demselben Vorfaktor. Daher beeinflusst $R(x,y)$ nur die Länge der Flussvektoren, nicht aber deren Richtung. Wie gezeigt, wird die Flussrichtung nur durch die Kamerabewegung bestimmt, d.h. durch die Lage des Expansionspunktes. Für diese Translationsbewegung ist die Richtung der Flussvektoren also unabhängig von der Tiefenstruktur der Umgebung.

**Optische Fluss bei Kamera in Fahrtrichtung**

Für eine Omnicam, deren Achse in Fahrtrichtung zeigt, vereinfachen sich die Flussgleichungen (60f):

$$\dot{x} \;=\; \frac{Vx}{R} \tag{63}$$

$$\dot{y} \;=\; \frac{Vy}{R} \tag{64}$$

Dies ist dem Flussfeld der Lochkamera sehr ähnlich. Der einzige Unterschied besteht im Nenner $R$, bei der Lochkamera steht dort $Z$. Bei beiden Kameratypen ist das Flussfeld in diesem Fall rein radial, d.h. der Flussvektor ($\dot{x}$, $\dot{y}$) ist parallel zum Radiusvektor ($x,y$), auch wenn sich $R(x,y)$ über das Bild ändert.

Für eine frontoparallele Wand bei der Tiefe $Z = c$ folgt aus Gl. (38)

$$R(x, y) = \frac{4f^2 + x^2 + y^2}{4f^2 - x^2 - y^2} c \tag{65}$$

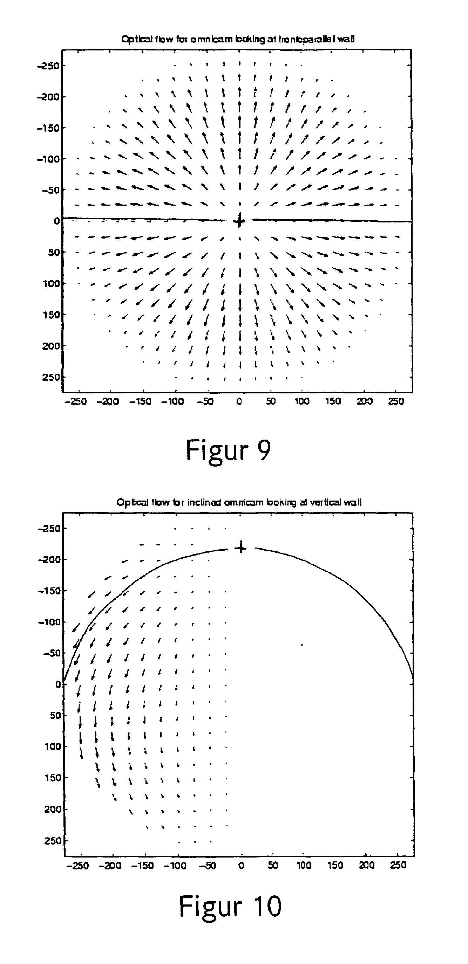

Daher sieht das zugehörige Flussfeld aus wie in Fig. 9 gezeigt:

$$\dot{x} \;=\; \frac{Vx}{c} \cdot \frac{4f^2 - x^2 - y^2}{4f^2 + x^2 + y^2} \tag{66}$$

$$\dot{y} \;=\; \frac{Vy}{c} \cdot \frac{4f^2 - x^2 - y^2}{4f^2 + x^2 + y^2} \tag{67}$$

**Optischer Fluss einer vertikalen Seitenwand**

Man betrachte nun wieder eine Kamera mit Neigungswinkel $\tau$ am Fahrzeug wie in Fig. 3. Eine vertikale Seitenwand parallel zur Fahrrichtung ist gegeben durch $X = a$. Die Wandentfernung nach Gl. (39) kann man in die allgemeine Flussgleichung (60f) einsetzen:

$$\dot{x} \;=\; \frac{V}{a} \cdot \left( \cos\tau - \frac{y}{2f}\sin\tau \right) \cdot \frac{x^2}{2f - z} \tag{68}$$

$$\dot{y} \;=\; \frac{V}{a} \cdot \left( y\cos\tau + (z + \frac{x^2}{2f})\sin\tau \right) \cdot \frac{x}{2f - z} \tag{69}$$

Ausführlicherlicher lautet dies so:

$$\dot{x} \;=\; \frac{V}{a} \cdot \left( \cos\tau - \frac{y}{2f}\sin\tau \right) \cdot \frac{4fx^2}{4f^2 + x^2 + y^2} \tag{70}$$

$$\dot{y} \;=\; \frac{V}{a} \cdot \left( \cos\tau + \frac{4f^2 + x^2 - y^2}{4fy}\sin\tau \right) \cdot \frac{4fxy}{4f^2 + x^2 + y^2} \tag{71}$$

Dies ist in Fig. 10 illustriert.

**Optischer Fluss einer horizontalen Ebene**

Eine horizontale Ebene (z.B. die Straße oder ein Garagendach) ist gegeben durch $Y_V = b$. Die Wandentfernung nach Gl. (42) kann man in die allgemeine Flussgleichung (60f) einsetzen:

$$\dot{x} \;=\; \frac{Vx}{b} \cdot \left( \cos\tau - \frac{y}{2f}\sin\tau \right) \cdot \frac{y\cos\tau + z\sin\tau}{2f - z} \tag{72}$$

$$\dot{y} \;=\; \frac{V}{b} \cdot \left( y\cos\tau + (z + \frac{x^2}{2f})\sin\tau \right) \cdot \frac{y\cos\tau + z\sin\tau}{2f - z} \tag{73}$$

$$\tag{74}$$

Ausführlicherucher lautet dies so:

$$\dot{x} \;=\; \frac{Vx}{b} \cdot \left( \cos\tau - \frac{y}{2f}\sin\tau \right) \cdot \frac{4fy\cos\tau + (4f^2 - x^2 - y^2)\sin\tau}{4f^2 + x^2 + y^2}$$

$$\dot{y} \;=\; \frac{Vy}{b} \cdot \left( \cos\tau + \frac{4f^2 + x^2 - y^2}{4fy}\sin\tau \right) \cdot \frac{4fy\cos\tau + (4f^2 - x^2 - y^2)\sin\tau}{4f^2 + x^2 + y^2}$$

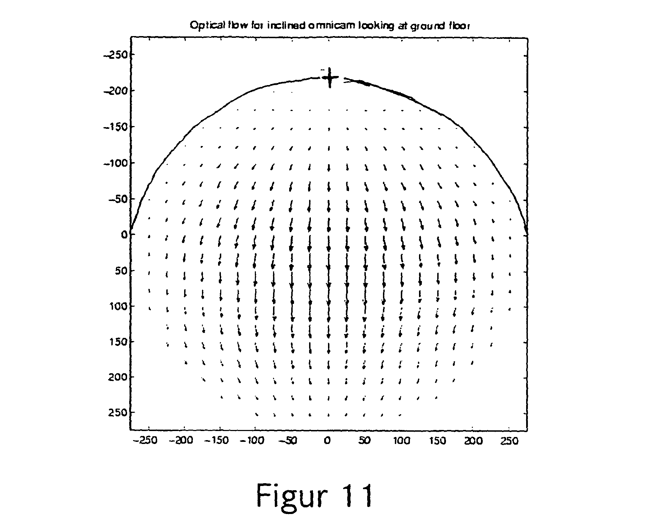

Dies ist in Fig. 11 illustriert.

Zur Vereinfachung kann man noch die dritte binomische Formel anwenden:

$$\dot{x} \;=\; \frac{V\,x}{b}\cdot\left(\cos\tau - \frac{y}{2f}\sin\tau\right)\cdot\frac{4fy\cos\tau + (4f^2 - x^2 - y^2)\sin\tau}{4f^2 + x^2 + y^2} \qquad (75)$$

$$\dot{y} \;=\; \frac{V}{4fb}\cdot\frac{\left(4fy\cos\tau + (4f^2 - y^2)\sin\tau\right)^2 - x^4\sin^2\tau}{4f^2 + x^2 + y^2} \qquad (76)$$

**Optischer Fluss eines Korridors**

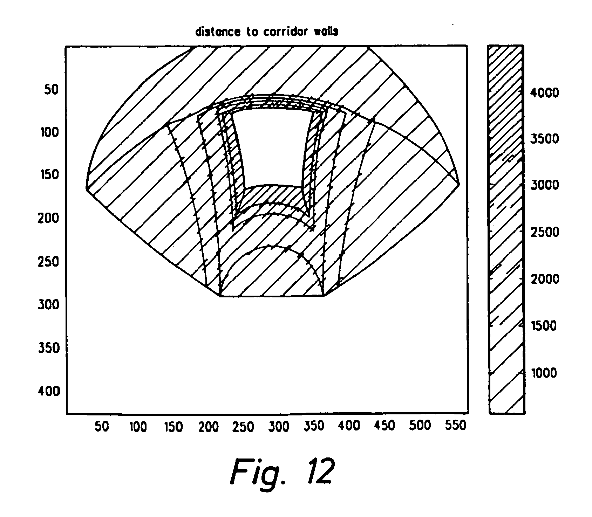

Fig. 12 zeigt die Tiefenkarte eines Korridors. Der Seitenbalken zeigt die zur Codierung der Tiefe verwendeten Farben. Die Tiefe wurde nach Gl. (39) für die vertikalen Wände und Gl. (42) für den horizontalen Boden und die Decke berechnet.

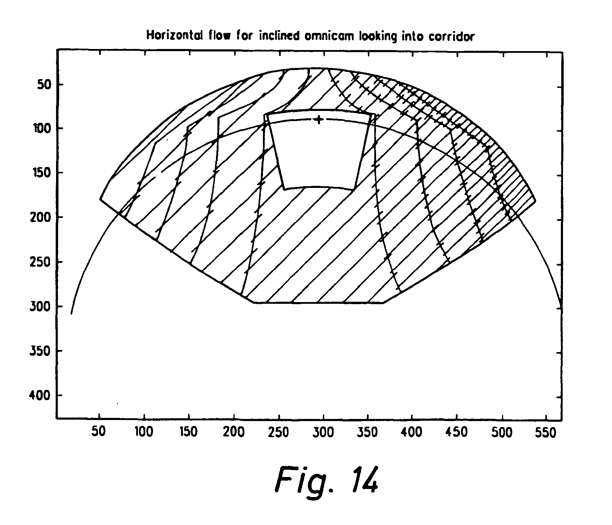

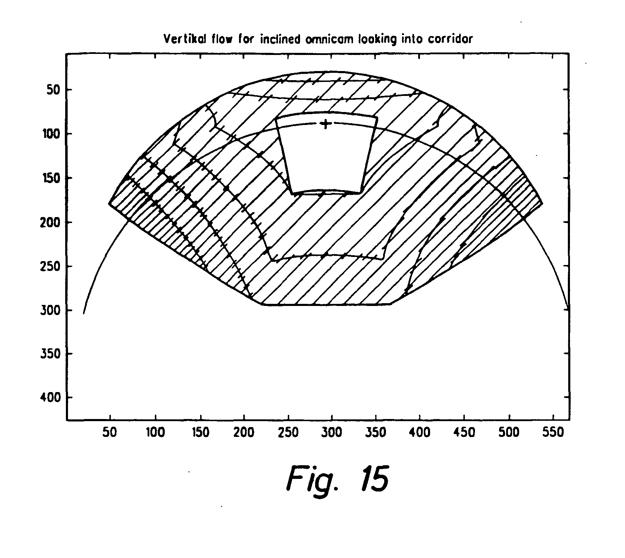

Fig. 13 zeigt den theoretisch erwarteten Fluss für diesen Korridor. Er kann nach Gl. (70f) für die vertikalen Wände und Gl. (75f) für Boden und Decke berechnet werden. Horizont und FOE sind wie oben durch den gelben Kreisbogen bzw. ein Pluszeichen markiert. Die Fig. 14 und 15 zeigen dasselbe Flussfeld als farbkodierte Bilder jeweils für den horizontalen und vertikalen Fluss.

Diejenigen Stellen im Bild, an denen der Modellfluss geringer ist, als der tatsächlich gemessene Fluss, sind potentielle Kollisionskandidaten und werden als solche dem Fahrer in einer auffälligen Farbe dargestellt und können bei entsprechender Größe auch zur Generierung eines beispielsweise akustischen Warnsignals herangezogen werden.

**Patentansprüche**

1. Verfahren zur Überwachung des Freiraums in Fahrtrichtung eines Fahrzeuges,
   bei welchem mittels eines Kamerasystems Bilddaten des im Bereich der Fahrtrichtung befindlichen Fahrzeugumfeldes aufgenommen werden,
   wobei zusätzlich auf Basis der Betriebsparameter und der Abmessungen des Fahrzeuges der für eine ungehinderte Fahrt benötigte dreidimensionale Freiraum in einer Signalverarbeitungseinheit voraus berechnet wird,
   und wobei dem Führer des Fahrzeuges zumindest der den benötigten Freiraum darstellende Teil der erfassten Bilddaten angezeigt wird, wobei die Anzeige der Bilddaten hierbei im wesentlichen aus einer Perspektive erfolgt, wie sich die in Fahrrichtung liegende Fahrzeugumgebung dem Führer des Fahrzeuges bei direkter Sicht darstellen würde,
   und **dass** wenigstens die dem dreidimensionalen Freiraum zugeordneten Bilddaten einer Weiterverarbeitung unterzogen werden,
   wobei als ein Ergebnis dieser Weiterverarbeitung, der Fahrzeugführer darüber informiert wird, ob für eine ungehinderte Fahrt ein ausreichender Freiraum zur Verfügung steht oder nicht, **dadurch gekennzeichnet, dass** dem Führer des Kraftfahrzeuges dabei zumindest Teile der durch das Kamerasystem erfassten Bilddaten des benötigten Freiraums auf einer Anzeige angezeigt werden, wobei die angezeigten Bilddaten durch eine symbolische Darstellung der Randbegrenzungen (16,26) des durch die Vorausberechnung in der Signalverarbeitungseinheit ermittelten, benötigten Freiraums überlagert werden und wobei die Darstellung der Randbegrenzung (16,26) mittels eines Gittermusters, einer Aneinanderreihung von Balken oder eines Schachbrettmusters dargestellt wird.

2. Verfahren nach Anspruch 1,
   **dadurch gekennzeichnet,**
   **dass** die Weiterverarbeitung dynamische, zeitliche Veränderungen in den Bilddaten in Betracht zieht.

3. Verfahren nach einem der vorhergehenden Ansprüche,
   **dadurch gekennzeichnet,**
   **dass** die Information des Fahrzeugführers für den Fall, dass für eine ungehinderte Fahrt kein ausreichender Freiraum zur Verfügung steht, durch Warnmittel, insbesondere durch optisch, akustisch oder haptisch wahrnehmbare Signalgeber, erfolgt.

4. Verfahren nach einem der vorhergehenden Ansprüche,

**dadurch gekennzeichnet,**
**dass** die Information des Fahrzeugführers für den Fall, dass für eine ungehinderte Fahrt kein ausreichender Freiraum zur Verfügung steht, die bildliche Darstellung zumindest eines Teils der weiterverarbeiteten Bilddaten erfolgt, wobei in diesen Bilddaten diejenigen Objekte (11,12), welche sich behindernd im benötigten Freiraum befinden von den anderen Bildobjekten hervorgehoben dargestellt werden.

5. Verfahren nach Anspruch 4,
**dadurch gekennzeichnet,**
**dass** die Hervorhebung dergestalt erfolgt, dass die behindernden Objekte (11,12) mit Symbolen überlagert werden, welche deren Bewegungsrichtung und/oder deren Bewegungsgeschwindigkeit repräsentieren.

6. Verfahren nach einem der vorhergehenden Ansprüche,
**dadurch gekennzeichnet,**
**dass** die symbolische Darstellung der Randbegrenzungen durch symbolisch dargestellte Wände erfolgt.

7. Verfahren nach einem der vorhergehenden Ansprüche,
**dadurch gekennzeichnet,**
**dass** die symbolische Darstellung der Randbegrenzungen durch symbolisch dargestellte Wände und einen Dekkenbereich und/oder Bodenbereich in Form eines Tunnels erfolgt.

8. Verfahren nach einem der vorhergehenden Ansprüche,
**dadurch gekennzeichnet,**
**dass** die Wandbereiche und/oder der Deckenbereich und/oder der Bodenbereich so gestalten werden, dass sie

   - eine geometrisch klare und eindeutig identifizierbare Struktur besitzen,
   - einen "Durchblick" auf die hinterlegte Videoszene gestatten und
   - so berechnet sind, dass sie auch während der Fahrzeugbewegung in Längsrichtung stillzustehen scheinen.

9. Verfahren nach einem der vorhergehenden Ansprüche,
**dadurch gekennzeichnet,**
**dass** die dem Führer des Fahrzeuges anzeige Szene zumindest für einen bestimmten zurückliegenden Zeitraum oder eine bestimmte zurückgelegte Fahrstrecke zwischengespeichert wird und durch den Fahrzeugführer zur wiederholten Ansicht abgerufen werden kann.

10. Verfahren nach einem der Ansprüche 6 bis 9,
**dadurch gekennzeichnet,**
**dass** die mit den Randbegrenzungen des notwendigen Freiraums überlagerten Kamerabilddaten einem auf dem optischen Fluss basierenden Bildverarbeitungsverfahren zugeführt werden, welches die Bewegung der ortsfesten Randbegrenzungen in den Bilddaten mit der tatsächlichen Bewegung von Gegenständen im Bild vergleicht, wobei diejenigen Stellen im Bild, an denen der Modellfluss geringer ist, als der tatsächlich gemessene Fluss, als potentielles Kollisionsobjekt gewertet wird.

11. Verfahren nach Anspruch 10,
**dadurch gekennzeichnet,**
**dass** bei Vorhandensein eines potentiellen Kollisionsobjekts dieses optisch, beispielsweise farblich, hervorgehoben wird und/oder der Fahrzeugführer durch ein Warnsignal davor gewarnt wird.

12. Vorrichtung zur Überwachung des Freiraums in Fahrtrichtung eines Fahrzeuges,
mit einem Kamerasystem zur Erfassung von Bilddaten aus dem in Fahrtrichtung des Fahrzeuges befindlichen Fahrzeugumfeldes, mit einer Signalverarbeitungseinheit, welche mit Sensoren zur Erfassung der Betriebsparameter des Fahrzeugs in Verbindung steht und einen Speicher aufweist, in welchem Daten bezüglich der Abmessungen des Fahrzeugs abgelegt sind,
sowie mit einer mit der Signalverarbeitungseinheit in Verbindung stehenden Anzeigeeinheit zur Anzeige zumindest des den benötigten dreidimensionalen Freiraum darstellende Teils der Bilddaten, wobei
der der Signalverarbeitungseinheit zugeordnete Speicher so ausgelegt und organisiert ist, wobei
eine Mehrzahl von Datensätze bezüglich unterschiedlicher Fahrzeugabmessungen abgespeichert sind, welche gezielt ausgewählt und der Signalverarbeitungseinheit zur Verfügung gestellt werden können, wobei
die Vorrichtung eine Einheit zur Bildverarbeitung auf Basis des optischen Flusses umfasst, mittels welcher die mit den Randbegrenzungen des notwendigen Freiraums überlagerten Bilddaten dahingehend verarbeitet werde können,

dahingehend dass die Bewegung der ortsfesten Randbegrenzungen in den Bilddaten mit der tatsächlichen Bewegung von Gegenständen im Bild verglichen werden,

so dass diejenigen Stellen im Bild, an denen der Modellfluss geringer ist, als der tatsächlich gemessene Fluss, als potentielles Kollisionsobjekt gewertet werden können und dass die Vorrichtung eine Einheit zur Bildverarbeitung so mit der Anzeige für den Fahrzeugführer und/oder Warnsignalgebern in Verbindung steht,

so dass die potentiellen Kollisionsobjekte in den dargestellten Bilddaten hervorgehoben werden können oder dass der Fahrzeugführer vor diesen Objekten (11,12) gewarnt werden kann, und wobei die Darstellung der Randbegrenzung (16, 26) mittels eines Gittermusters, einer Aneinanderreihung von Balken oder eines Schachbrettmusters dargestellt wird.

13. Vorrichtung nach Anspruch 12,
**dadurch gekennzeichnet,**
**dass** das Mittel zur gezielten Auswahl eines der im Speicher abgespeicherten Datensätze eine vom Fahrzeugführer bedienbare Tastatur ist.

14. Vorrichtung nach einem der vorhergehenden Ansprüche,
**dadurch gekennzeichnet,**
**dass** das Mittel zum Austausch wenigstens eines im Speicher abgespeicherten Datensatzes eine Kommunikationseinrichtung, zur Fernübertragung von Daten, umfasst.

15. Vorrichtung nach einem der vorhergehenden Ansprüche,
**dadurch gekennzeichnet,**
**dass** das Kamerasystem zumindest eine katadioptrische Kamera umfasst.

16. Vorrichtung nach einem der vorhergehenden Ansprüche,
**dadurch gekennzeichnet,**
**dass** die Vorrichtung einen Speicher zur Zwischenspeicherung zumindest von Teilen der dem Führer des Fahrzeuges angezeigten Bilddaten umfasst,
und **dass** ein Mittel vorgesehen ist, mittels welcher der Fahrzeugführer diese zwischengespeicherten Bilddaten zur wiederholten Ansicht abrufen kann.

17. Verwendung des Verfahrens und der Vorrichtung nach einem der vorhergehenden Ansprüche, bei der Rückraumüberwachung im Ranggierbetrieb von Fahrzeugen.


**Claims**

1. Method for monitoring the free space in the direction of travel of a vehicle,
wherein image data of the vehicle environment in the region of the direction of travel are recorded by means of a camera system,
wherein the three-dimensional free space required for unimpeded travel is further calculated in advance in a signal processing unit on the basis of the operating parameters and the dimensions of the vehicle,
and wherein at least that part of the recorded image data which represents the required free space is indicated to the driver of the vehicle, the display of the image data being substantially offered from a perspective which corresponds to the direct view the driver would have of the environment of the vehicle in the direction of travel,
and wherein at least the image data assigned to the three-dimensional free space are subjected to further processing, wherein, as a result of this further processing, the driver of the vehicle is informed whether or not sufficient free space is available for unimpeded travel, **characterised in that** at least parts of the image data of the required free space are displayed to the driver of the motor vehicle on a display, wherein a symbolic representation of the of the edge boundaries (16, 26) of the required free space determined by pre-calculation in the signal processing unit is superimposed on the displayed image data, and wherein the edge boundaries (16, 26) are displayed by means of a grid pattern, a line-up of bars or a chessboard pattern.

2. Method according to claim 1,
**characterised in that**
the further processing takes account of dynamic chronological changes in the image data.

**3.** Method according to any of the preceding claims,
**characterised in that**
the driver of the vehicle is, if insufficient free space is available for unimpeded travel, informed by warning means, in particular by optically, acoustically or haptically perceivable signal generators.

**4.** Method according to any of the preceding claims,
**characterised in that**
the driver of the vehicle is, if insufficient free space is available for unimpeded travel, informed by the pictorial representation of at least a part of the image data subjected to further processing,
wherein in these image data those objects (11, 12) which form an impediment in the required free space are highlighted against the other image objects.

**5.** Method according to claim 4,
**characterised in that**
the highlighting is achieved by superimposing on the impeding objects (11, 12) symbols which represent their direction and/or their speed of movement.

**6.** Method according to any of the preceding claims,
**characterised in that**
the symbolic representation of the edge boundaries is based on symbolically depicted walls.

**7.** Method according to any of the preceding claims,
**characterised in that**
the symbolic representation of the edge boundaries is based on symbolically depicted walls and a ceiling region and/or a floor region in the form of a tunnel.

**8.** Method according to any of the preceding claims,
**characterised in that**
the wall regions and/or the ceiling region and/or the floor region is/are designed such that

- they have a geometrically clear and unambiguously identifiable structure,
- they offer a "view through" on the video scene displayed behind and
- they are calculated such that they appear to be stationary in the longitudinal direction even while the vehicle is in motion.

**9.** Method according to any of the preceding claims,
**characterised in that**
the scene displayed to the driver of the vehicle is stored in a buffer memory at least for a defined elapsed period of time or a defined distance which has been covered and can be retrieved by the driver of the vehicle for repeated viewing.

**10.** Method according to any of claims 6 to 9,
**characterised in that**
the camera image data onto which the edge boundaries of the required free space have been superimposed are fed to an image processing method based on optical flow, which image processing method compares the movements of the stationary edge boundaries in the image data to the actual movement of objects in the image,
wherein those locations in the image where the model flow is less than the actually measured flow are assessed as a potential collision object.

**11.** Method according to claim 10,
**characterised in that**
in the presence of a potential collision object, this object is optically highlighted, for example by colour, and/or **in that** the driver of the vehicle is warned of the presence of this object by a warning signal.

**12.** Device for monitoring the free space in the direction of travel of a vehicle, comprising a camera system for recording image data from the vehicle environment in the direction of travel of the vehicle,
further comprising a signal processing unit which is connected to sensors for the detection of the operating parameters of the vehicle and which includes a memory in which data relating to the dimensions of the vehicle are stored,

and further comprising a display unit connected to the signal processing unit for displaying at least the part of the image data which represents the required three-dimensional free space,

wherein the memory assigned to the signal processing unit is configured and organised such that

a plurality of records relating to different vehicle dimensions is stored, which records can be selected as required and made available to the signal processing unit,

wherein the device comprises a unit for image processing on the basis of optical flow, by means of which the image data onto which the edge boundaries of the required free space have been superimposed can be processed such that the movement of the stationary edge boundaries in the image data is compared to the actual movement of objects in the image,

so that those locations in the image where the model flow is less than the actually measured flow can be assessed as a potential collision object, and wherein the unit for image processing of the device is connected to the display for the driver of the vehicle and/or to the warning signal generators in such a way that the potential collision objects can be highlighted in the displayed image data or that the driver can be warned of these objects (11, 12), and wherein the edge boundaries (16, 26) are displayed by means of a grid pattern, a line-up of bars or a chessboard pattern.

13. Device according to claim 12,
    **characterised in that**
    the means for the selection of one of the records stored in the memory is a keyboard which can be operated by the driver of the vehicle.

14. Device according to any of the preceding claims,
    **characterised in that**
    the means for exchanging at least one of the records stored in the memory includes a communication device for the remote communication of data.

15. Device according to any of the preceding claims,
    **characterised in that**
    the camera system includes at least one catadioptic camera.

16. Device according to any of the preceding claims,
    **characterised in that**
    the device includes a memory for buffering at least parts of the image data displayed to the driver of the vehicle, and **in that** means are provided whereby the driver of the vehicle can retrieve these buffered image data for repeated viewing.

17. Application of the method and of the device according to any of the preceding claims, wherein the rear space is monitored when manoeuvring vehicles.

**Revendications**

1. Procédé de surveillance d'un espace libre dans le sens de la marche d'un véhicule automobile, selon lequel des données d'image de l'environnement du véhicule qui se trouve dans la zone du sens de la marche sont enregistrées au moyen d'un système de caméra, en outre sur la base de paramètres de fonctionnement et de la taille du véhicule automobile l'espace libre tridimensionnel nécessaire à une marche sans entrave étant calculé à l'avance dans une unité de traitement de signal, et au moins la partie des données d'image enregistrées représentant l'espace libre nécessaire étant indiquée au conducteur du véhicule automobile, l'affichage des données d'image s'effectuant ici essentiellement à partir d'une perspective montrant comment l'environnement du véhicule se trouvant dans le sens de la marche serait présenter au conducteur du véhicule à vue directe, et au moins les données d'image associées à l'espace libre tridimensionnel étant soumises à un traitement ultérieur, un résultat dudit traitement ultérieur étant que le conducteur du véhicule est informé si un espace libre suffisant pour une marche sans entrave est disponible ou non, **caractérisé en ce qu'**au moins des parties des données d'image de l'espace libre nécessaire enregistrées par le système de caméra sont indiquées au conducteur de véhicule sur un écran, les données d'image affichées étant superposées par une représentation symbolique des délimitation de bord (16, 26) de l'espace libre nécessaire déterminé par le calcul préalable dans l'unité de traitement de signal et la représentation de la délimitation de bord (16, 26) étant représentée au moyen d'un quadrillage, d'une juxtaposition de barres ou d'un échiquier.

**2.** Procédé selon la revendication 1, **caractérisé en ce que** le traitement ultérieur prend en compte des modifications dynamiques et temporelles dans les données d'image.

**3.** Procédé selon l'une quelconque des revendications précédentes, **caractérisé en ce que** l'information que l'espace libre n'est pas suffisant pour une marche sans entrave, est transmise au conducteur de véhicule par un moyen d'avertissement, en particulier par un émetteur de signal optique, acoustique ou perceptible de manière tactile.

**4.** Procédé selon l'une quelconque des revendications précédentes, **caractérisé en ce que** l'information que pour une marche sans entrave il n'existe pas d'espace libre suffisant à disposition, est transmise au conducteur par la représentation en image d'au moins une partie des données d'image traitées ultérieurement, dans ces données d'images chaque objet (11, 12), faisant obstacle dans l'espace libre nécessaire, étant mis en valeur par rapport aux autres objets d'image.

**5.** Procédé selon la revendication 4, **caractérisé en ce que** la mise en valeur s'effectue de telle sorte que les objets (11, 12) faisant obstacle sont superposés par des symboles lesquels représentent leur sens de mouvement et / ou leur vitesse de mouvement.

**6.** Procédé selon l'une quelconque des revendications précédentes, **caractérisé en ce que** la représentation par symboles des délimitations de bord s'effectue par des parois représentées par des symboles.

**7.** Procédé selon l'une quelconque des revendications précédentes, **caractérisé en ce que** la représentation par symboles des délimitations de bord s'effectue par des parois représentées par des symboles et par une zone de plafond et / ou par une zone de plancher en forme de tunnel.

**8.** Procédé selon l'une quelconque des revendications précédentes, **caractérisé en ce que** les zones de paroi et / ou la zone de plafond et / ou la zone de plancher sont conçues de telle sorte qu'elles

- possèdent une structure géométrique pouvant être identifiées de manière claire et sans ambiguïté,
- permettent une « vue » sur la scène vidéo enregistrée et
- sont calculées de telle sorte qu'elles semblent également figées dans la direction longitudinale pendant le mouvement du véhicule.

**9.** Procédé selon l'une quelconque des revendications précédentes, **caractérisé en ce que** la scène indiquée au conducteur du véhicule est mémorisée de manière temporaire au moins pour une certaine durée de temps précédente ou un certain trajet parcouru et peut être appelée par le conducteur du véhicule pour être revue.

**10.** Procédé selon l'une quelconque des revendications précédentes 6 à 9, **caractérisé en ce que** les données d'image de caméra superposées avec les délimitations de bord de l'espace libre nécessaire sont fournies à un procédé de traitement d'image se basant sur le flux optique, lequel compare le mouvement des délimitations de bord fixes dans les données d'image au mouvement réel des objets sur l'image, chaque endroit sur l'image dans lequel le modèle de flux est plus petit que le flux réel mesuré étant évalué comme un objet de collision potentiel.

**11.** Procédé selon la revendication 10, **caractérisé en ce qu'**en présence d'un objet de collision potentiel, celui-ci est mis en valeur optiquement, par exemple grâce à des couleurs, et / ou est indiqué au conducteur du véhicule par un signal d'avertissement.

**12.** Dispositif de surveillance de l'espace libre dans le sens de la marche d'un véhicule, doté d'un système de caméra pour enregistrer des données d'image à partir de l'environnement du véhicule se trouvant dans le sens de la marche du véhicule, d'une unité de traitement de signal, laquelle est reliée à des capteurs pour enregistrer les paramètres de fonctionnement du véhicule, et d'une mémoire dans laquelle les données relatives à la taille du véhicule sont enregistrées, ainsi que d'une unité d'affichage reliée à l'unité de traitement de signal destinée à afficher au moins la partie des données d'image représentant l'espace libre tridimensionnel nécessaire, la mémoire associée à l'unité de traitement de signal étant conçue et organisée de telle sorte qu'une pluralité de jeux de données relatives aux différentes dimensions du véhicule soient mémorisés, lesquelles sont sélectionnées de manière ciblée et peuvent être mises à disposition de l'unité de traitement de signal, que le dispositif comprenne une unité de traitement d'image qui se base sur le flux optique, au moyen de laquelle les données d'image superposées avec les délimitations de bord de l'espace libre nécessaire peuvent être traitées, que le mouvement des délimitations de bord fixes dans les données d'image puisse être comparé au mouvement réel des objets dans l'image, de sorte que chaque endroit dans l'image dans lequel le modèle de flux est plus petit que le flux réel mesuré puisse être évalué comme un objet de collision potentiel, et que le dispositif, une unité pour le traitement d'image, soit relié à l'écran du conducteur du véhicule et /ou les émetteurs de signal d'avertissement, de sorte que les objets de collision potentielle puissent être mis en valeur dans les données d'image représentées ou que le conducteur du véhicule puisse être averti d'une collision potentielle avec ces objets (11, 12), et que la représentation de la délimitation de bord (16, 25) soit représentée au moyen d'un quadrillage, d'une juxtaposition de barres ou d'un échiquier.

13. Dispositif selon la revendication 12, **caractérisé en ce que** le moyen de sélection ciblée d'un jeu de données mémorisé dans la mémoire est un clavier pouvant être utilisé par le conducteur du véhicule.

14. Dispositif selon l'une quelconque des revendications précédentes, **caractérisé en ce que** le moyen d'échange d'au moins un jeu de données mémorisé dans la mémoire comprend un dispositif de communication pour le transfert à distance de données.

15. Dispositif selon l'une quelconque des revendications précédentes, **caractérisé en ce que** le système de caméra comprend au moins une caméra catadioptrique.

16. Dispositif selon l'une quelconque des revendications précédentes, **caractérisé en ce que** le dispositif comprend une mémoire pour la mémorisation provisoire d'au moins des parties des données d'image indiquées au conducteur du véhicule, et **en ce qu'**il est prévu un moyen avec lequel le conducteur du véhicule peut appeler ces données d'image temporairement mémorisées afin qu'il puisse les revoir.

17. Utilisation du procédé et du dispositif selon l'une quelconque des revendications précédentes, pour la surveillance de l'espace arrière lors de la manoeuvre de véhicules.

Fig. 1

Fig. 2

Figur 3

Figur 4

Omnicam compression function

Figur 5

Omnicam expansion function

Figur 6

Fig. 7

Figur 7

Figur 8

Figur 9

Figur 10

Figur 11

Fig. 12

Figur 13

Fig. 14

Vertikal flow for inclined omnicam looking into corridor

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1065642 A
- JP 2000067395 A
- EP 1158803 A2